(19) Europäisches Patentamt
European Patent Office
Office européen des brevets

(11) Numéro de publication : **0 314 591 B1**

(12) **FASCICULE DE BREVET EUROPEEN**

(45) Date de publication du fascicule du brevet :
**22.01.92 Bulletin 92/04**

(51) Int. Cl.⁵ : **A01G 23/06**

(21) Numéro de dépôt : **88440090.4**

(22) Date de dépôt : **25.10.88**

(54) **Outil d'essouchement.**

(30) Priorité : **28.10.87 FR 8715133**

(43) Date de publication de la demande :
**03.05.89 Bulletin 89/18**

(45) Mention de la délivrance du brevet :
**22.01.92 Bulletin 92/04**

(84) Etats contractants désignés :
**BE DE GB SE**

(56) Documents cités :
**EP-A- 0 161 169**
**FR-A- 2 615 354**
**US-A- 4 094 348**

(73) Titulaire : **Plaisance, Jean-Marie**
**3, Grande-Rue Montigny**
**F-54540 Badonviller (FR)**

(72) Inventeur : **Plaisance, Jean-Marie**
**3, Grande-Rue Montigny**
**F-54540 Badonviller (FR)**

(74) Mandataire : **Aubertin, François**
**Cabinet Lepage & Aubertin Innovations et**
**Prestations 4, rue de Haguenau**
**F-67000 Strasbourg (FR)**

## Description

L'invention concerne un outil d'essouchement pour engins de terrassement, comportant les caractéristiques du préambule de la revendication 1.

Cette invention trouvera son utilité, plus particulièrement, dans l'industrie spécialisée dans la fabrication d'engins de terrassement à transmission de force hydraulique et leurs accessoires.

Fréquemment, avant de procéder à des travaux de terrassement, il s'avère nécessaire d'éliminer les différentes souches provenant d'un abattage d'arbres qui a été effectué sur les lieux.

La solution la plus simple en ce qu'elle ne nécessite aucun outillage spécialisé consiste à évacuer la terre tout autour de ces souches, puis à sectionner leurs racines avant de les extraire du sol. Ce procédé est d'exécution longue et entraîne des dégradations considérables de l'état du terrain en le rendant particulièrement accidenté. En conséquence, les engins de terrassement vont rencontrer, ultérieurement, d'importantes difficultés pour se mouvoir en raison de la quantité non négligeable de terre retournée qui, en période de pluie, donne naissance à de nombreux bourbiers. Cette solution, malgré sa simplicité, perd, de ce fait, tout son attrait.

Par ailleurs, on connaît par le document EP-A-0.161.169 un outil d'essouchement qui, par l'intermédiaire de moyens de raccordement, peut être rendu solidaire d'un bras articulé équipant, habituellement, les engins de terrassement à transmission de force hydraulique.

Ainsi, ces outils d'essouchement sont composés, d'une part, d'un éperon de forme allongée dont le chant avant est biseauté de manière à former un bord tranchant destiné à fendre la souche suivant un plan vertical. Cet outil d'essouchement comporte, en outre, une lame de coupe disposée dans un plan sensiblement horizontal et rapporté sur l'un des côtés latéraux de l'éperon précité. En dehors de la fonction qui consiste à fendre la souche, l'éperon est destiné, après engagement dans cette dernière, à guider le déplacement de l'outil d'essouchement et se présente, à cet effet, saillant par rapport à la lame de coupe.

De manière à faciliter son engagement dans l'épaisseur du bois que constitue la souche et réduire les forces de frottement, la lame de coupe peut présenter, sur son chant avant et arrière, une série de dents taillées en escalier ayant chacune un bord tranchant perpendiculaire au plan vertical de l'éperon. Cette configuration particulière a tendance à rendre plus aisé l'éclatement du bois sous l'effet de la pression exercée par l'outil d'essouchement.

Cependant, les nombreux inconvénients que présente un tel outil d'essouchement proviennent essentiellement de sa structure et de la combinaison spécifique de l'éperon et d'une lame de coupe rapportée sur l'un des côtés latéraux de ce dernier.

Ainsi, au moment de pénétrer dans la souche, cette lame de coupe rencontre une résistance croissante et, en raison de son déport latéral, forme un bras de levier important ayant tendance à vriller l'outil et, finalement, le bras articulé de l'engin de terrassement.

De plus le fait d'engager en premier l'éperon dans la souche donne naissance à des forces de frottement venant s'additionner à celles exercées sur la lame de coupe au moment d'entrer en action. Cependant, à cet instant même, il est primordial que ladite lame de coupe horizontale pénètre de manière la plus efficace possible dans l'épaisseur du bois pour provoquer l'éclatement de la souche.

En conséquence, l'utilisation de cet outil d'essouchement connu nécessite des engins de terrassement à transmission de force hydraulique extrêmement puissants pour obtenir des résultats concluants et autoriser la destruction de souches de diamètre important.

Un autre inconvénient que présente un tel outil d'essouchement réside dans les dentures en forme d'escaliers usinées sur les bords tranchants de la lame de coupe.

En effet, le taillage de ces dentures est particulièrement difficile à exécuter en raison de la dureté relativement élevée des matériaux utilisés pour la réalisation desdits outils d'essouchement. De tels matériaux sont, cependant, indispensables pour permettre à ces derniers d'être performants et de résister aux différentes sollicitations qui leur sont appliquées.

De plus, il ne faut pas négliger que le tranchant de la lame de coupe et de l'éperon doit être repris fréquemment, sans quoi, l'outil perd de son efficacité. Or, les dentures rendent cette opération particulièrement difficile et fastidieuse.

La présente invention a pour but de remédier à l'ensemble des inconvénients précités en proposant un outil d'essouchement qui permette d'obtenir une meilleure répartition des efforts appliqués sur le bras articulé d'un engin de terrassement.

Un autre but de la présente invention consiste à proposer un outil d'essouchement dont l'efficacité et le rendement sont améliorés sans accroître, pour autant, les difficultés d'entretien.

Ainsi, l'invention concerne un outil d'essouchement comportant les caractéristiques du préambule de la revendication 1 et le problème auquel se rapporte cette invention est résolu par les caractéristiques de la partie caractérisante de ladite revendication 1.

Plus particulièrement, cet outil d'essouchement pour engins de terrassement, comporte dans sa partie supérieure des moyens de raccordement adaptés pour rendre solidaire ledit outil d'essouchement au bras articulé de l'engin de terrassement, des moyens de coupe horizontale constitués par un plat métallique disposé horizontalement et rapporté à l'extrémité inférieure d'un montant de faible épaisseur rendu solidaire, à sa partie supérieure, des moyens de raccordement et constituant une lame de coupe verticale, cet outil d'essouchement étant caractérisé en ce que lesdits moyens de coupe horizontale s'étendent de part et d'autre et, sensiblement, en avant de la lame de coupe verticale, le plat métallique formant ces moyens de coupe horizontale comportant, dans son chant avant, une découpe permettant de définir deux éléments tranchants situés de part et d'autre du plan médian vertical longitudinal de l'outil d'essouchement et présentant une coupe en biseau sur leur face supérieure leur conférant un bord tranchant.

Les avantages obtenus grâce à cette invention consistent, essentiellement, en ce que la disposition particulière des moyens de coupe horizontale par rapport à la lame de coupe verticale favorise, simultanément, l'engagement de l'outil d'essouchement dans l'épaisseur du bois d'une souche et l'éclatement de cette dernière.

L'invention est exposée ci-après plus en détail à l'aide de dessins représentant seulement un mode d'exécution.

La figure 1 représente une vue schématisée et en perspective de l'outil d'essouchement conforme à l'invention.

La figure 2 représente une vue de détail de la figure 1 et illustrant les moyens de coupe horizontale situés de part et d'autre de la lame de coupe verticale.

On se réfère aux différentes figures.

L'outil d'essouchement 1, conforme à l'invention et dont la description va suivre, est destiné plus particulièrement à être utilisé par des engins de terrassement à transmission de force hydraulique. A cet effet, cet outil d'essouchement 1 comporte, dans sa partie supérieure 2, des moyens de raccordement 3 autorisant sa coopération avec l'extrémité libre d'un bras articulé d'un tel engin de terrassement.

La structure et la configuration de ces moyens de raccordement 3 sont déterminées par l'Homme du Métier considéré, en fonction de l'engin auquel doit être adapté l'outil d'essouchement 1, et, sont, en conséquence, indépendantes de la présente invention.

Plus précisément, cette dernière concerne les éléments de la partie inférieure 4 de l'outil d'essouchement 1 et dont les caractéristiques particulières facilitent considérablement la destruction et l'enlèvement des souches.

Ainsi, cet outil d'essouchement 1 est muni de moyens de coupe horizontale 5, 6, surmontés d'une lame de coupe verticale 7, lesdits moyens de coupe horizontale 5, 6, étant situés de part et d'autre et à l'avant de cette dernière.

Plus précisément, la lame de coupe verticale 7 est formée d'un montant 8 disposé dans le plan médian vertical longitudinal 9 de l'outil d'essouchement 1 et rendue solidaire, à sa partie supérieure 10, des moyens de raccordement 3. Ce montant 8, de faible épaisseur comporte, sur son chant avant 11, un élément en forme de coin 12 dont le bord tranchant 13, disposé verticalement, permet de fendre le bois pour autoriser le passage de l'outil d'essouchement 1 et, finalement, détruire la souche.

Il est à remarquer que l'élément en forme de coin 12 peut, selon le cas, faire partie de la masse constituant le montant 8 ou rapporté, par soudage ou autre, sur le chant avant 11 de ce dernier. Dans ce dernier cas, l'élément en forme de coin 12 peut être réalisé, avantageusement, en un matériau particulièrement résistant et présentant les propriétés requises pour la coupe des souches.

A l'extrémité inférieure 14 dudit montant 8 ou lame de coupe 7 est rapporté un plat métallique 15 disposé horizontalement et s'étendant symétriquement de part et d'autre du plan médian vertical longitudinal 9 de l'outil d'essouchement 1 et définissant les moyens de coupe horizontale 5, 6.

Selon un mode de réalisation préférentiel, le plat métallique 15 comporte, dans son chant avant 16, une découpe 17 permettant de définir deux éléments tranchants 18, 19 situés de part et d'autre du plan médian vertical longitudinal 9 de l'outil d'essouchement 1.

Avantageusement, les éléments tranchants 18, 19 présentent sur leur face supérieure 20 une découpe en biseau leur conférant un bord tranchant 21 perpendiculaire au plan médian vertical 9.

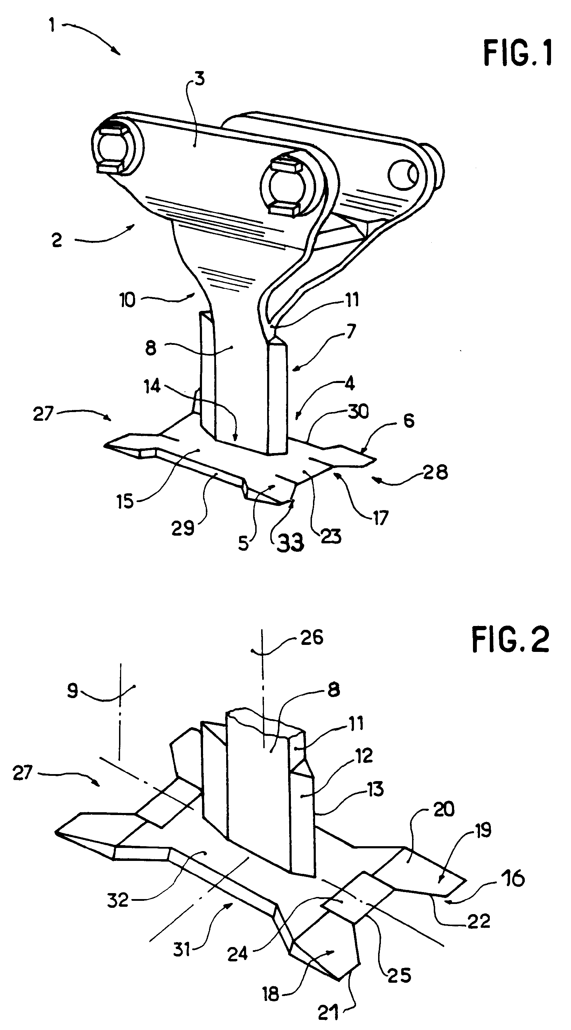

Tel que visible dans la figure 2, les bords latéraux 22 de la découpe 17 vont en s'évasant de l'intérieur vers l'extérieur. Cette configuration assure aux éléments tranchants 18, 19 une taille en oblique 33 favorisant leur engagement progressif dans l'épaisseur du bois et l'éclatement de ce dernier.

Il est à remarquer, en outre, que le plat métallique 15 est biseauté sur sa face supérieure 24 et au niveau de son bord avant 23, délimité par les éléments tranchants 18, 19, ceci dans le but d'obtenir un bord tranchant 25 réduisant le coefficient de résistance à la pénétration de l'outil d'essouchement 1 dans une souche quelconque.

Avantageusement, cet outil d'essouchement 1 présente, dans sa partie inférieure 4, une structure sensiblement symétrique par rapport à un plan médian transversal 26. De ce fait, on retrouve dans sa partie arrière 27 les mêmes éléments et caractéristiques que ceux décrits ci-dessus et situés dans la partie avant 28.

L'avantage d'une telle disposition consiste, essentiellement, en ce que l'outil d'essouchement 1 peut travailler soit en pression, soit en traction selon l'action exercée par le bras articulé de l'engin de terrassement.

Cependant, cette spécificité confère au plat métallique 15 une surface relativement importante ayant tendance à augmenter les forces de frottement exercées sur l'outil d'essouchement 1 lors d'une destruction de souche.

Pour remédier à cet inconvénient, on réalise dans les chants latéraux 29, 30 dudit plat métallique 15 des découpes 31 permettant de réduire sa section et, en conséquence, les efforts qui lui sont appliqués au moment de la coupe.

Selon un autre mode de réalisation, on confère au plat métallique 15 une forme sensiblement concave en rehaussant légèrement ses bords latéraux 32. Les moyens de coupe horizontale 5, 6 empruntent, ainsi, l'aspect d'une gouge dont on connaît l'intérêt dans les domaines tels que l'ébénisterie, la menuiserie et autres. En effet, cette forme particulière favorise l'engagement de l'outil d'essouchement 1 dans l'épaisseur du bois et accroît, de ce fait, son efficacité et son rendement.

Cependant, on constate, qu'en règle générale, le bras articulé, commandé par l'engin de terrassement à transmission de force hydraulique, transmet un mouvement circulaire à l'outil d'essouchement 1. Ainsi, cette efficacité des moyens de coupe horizontale 5, 6 peut également être améliorée en conférant au plat métallique 15 une forme hémicylindrique, concentrique à un axe perpendiculaire au plan médian vertical 9. Ainsi, cette forme est obtenue en relevant, respectivement, la partie avant et arrière de ce plat métallique 15. Cette caractéristique améliore le rendement de l'outil d'essouchement 1 en favorisant sa plongée dans la souche et ce, en raison du mouvement basculant communiqué par l'intermédiaire du bras articulé précité.

Les principaux avantages obtenus grâce à cette invention consistent, essentiellement, en ce que l'on gagne en efficacité, donc en rapidité des travaux à exécuter tout en évitant d'utiliser l'engin de terrassement d'une puissance excessive. Par ailleurs, en raison d'une meilleure répartition des efforts exercés sur l'outil d'essouchement, les contraintes appliquées au bras articulé sont moins importantes.

## Revendications

1. Outil d'essouchement (1) pour engins de terrassement, comportant dans sa partie supérieure (2) des moyens de raccordement (3) adaptés pour rendre solidaire ledit outil d'essouchement au bras articulé de l'engin de terrassement, des moyens de coupe horizontale (5, 6) constitués par un plat métallique (15) disposé horizontalement et rapporté à l'extrémité inférieure (14) d'un montant (8), de faible épaisseur, rendu solidaire à sa partie supérieure (10) des moyens de raccordement (3), et constituant une lame de coupe verticale (7), caractérisé par le fait que lesdits moyens de coupe horizontale (5, 6) s'étendent de part et d'autre et, sensiblement, en avant de la lame de coupe verticale (7), le plat métallique (15), formant ces moyens de coupe horizontale (5, 6) comportant, dans son chant avant (16), une découpe (17) permettant de définir deux éléments tranchants (18, 19) situés de part et d'autre du plan médian vertical longitudinal (9) de l'outil d'essouchement (1) et présentant une coupe en biseau sur leur face supérieure (20) leur conférant un bord tranchant (21).

2. Outil d'essouchement (1) selon la revendication 1, caractérisé par le fait que la découpe (17) présente ses bords latéraux (22) allant en s'évasant de l'intérieur vers l'extérieur conférant aux éléments tranchants (18, 19) une taille en oblique (33).

3. Outil d'essouchement (1) selon la revendication 1, caractérisé par le fait que le plat métallique (15) est biseauté sur sa face supérieure (24) et au niveau de son bord avant (23) délimité par les éléments tranchants (18, 19) de manière à définir un bord tranchant (25).

4. Outil d'essouchement (1) selon la revendication 1, caractérisé par le fait que le bord tranchant (21) des éléments tranchants (18, 19) est perpendiculaire au plan médian vertical longitudinal (9) dudit outil d'essouchement.

5. Outil d'essouchement (1) selon les revendications 1 à 4, caractérisé par le fait qu'il comporte, dans sa partie inférieure (4) une structure sensiblement symétrique par rapport à un plan médian transversal (26) et présente, de ce fait, les mêmes caractéristiques dans sa partie arrière (27) que celles de sa partie avant (28).

6. Outil d'essouchement (1) selon les revendications 1 et 5, caractérisé par le fait que le plat métallique (15) présente dans ses chants latéraux (29, 30), des découpes (31) permettant de réduire sa surface pour diminuer les forces de frottement qui lui sont appliquées au moment de la coupe.

7. Outil d'essouchement (1) selon la revendication 1, caractérisé par le fait que le plat métallique (16) comporte ses bords latéraux (32) rehaussés de manière à présenter une forme concave équivalent, sensiblement, à une gouge.

## Claims

1. Tree stump eradicator (1) for digging units, comprising, in its upper part (2), connecting means (3) adapted for rendering said tree stump eradicator integral with the hinged arm of the digging unit, horizontal cutting means (5, 6) formed of a metallic flat bar (15) horizontally arranged and inserted onto the lower end (14) of a stay (8) of a small thickness made integral, at its upper part (10), with the connecting means (3) and forming a vertical cutting blade (7), characterized in that said horizontal cutting means (5, 6) extend on both sides of and substantially at the front portion of the vertical cutting blade (7), the metallic flat bar (15) forming these horizontal cutting means (5, 6) comprising, in its front edge (16), a cut (17) allowing to define two sharp members (18, 19) located on both sides of the longitudinal vertical median plane (9) of the tree stump eradicator (1) and having a bevelled section at their upper face (20) which confers them a sharp edge (21).

2. Tree stump eradicator (1) according to claim 1, characterized in that the side edges (22) of the cut (17) are widening from inside to outside, conferring an oblique edge (33) to the sharp members (18, 19).

3. Tree stump eradicator (1) according to claim 1, characterized in that the metallic flat bar (15) is bevelled on its upper face (24) and at the level of its front edge (23) delimited by the sharp members (18, 19), so as to define a sharp edge (25).

4. Tree stump eradicator (1) according to claim 1, characterized in that the sharp edge (21) of the sharp members (18, 19) is perpendicular to the longitudinal vertical median plane (9) of said tree stump eradicator.

5. Tree stump eradicator (1) according to claims 1 and 4, characterized in that it comprises, in its lower part (4), a structure substantially symmetrical with respect to a transversal median plane (26) and, hence, has, in its rear part (27) the same features as those of its front part (28).

6. Tree stump eradicator (1) according to claims 1 and 5, characterized in that the metallic flat bar (15) comprises, in its side edges (29, 30), cuts (31) allowing to reduce its area in order to reduce the friction forces applied to same when cutting.

7. Tree stump eradicator (1) according to claim 1, characterized in that the side edges (32) of the metallic flat bar (15) are raised, so that this latter has a concave shape substantially equivalent to a chisel.

**Patentansprüche**

1. Stumpfrodegerät (1) für Erdarbeitzeuge, das in seinem Oberteil (2) Anschlußmittel (3), die angepaßt sind, um das genannte Stumpfrodegerät fest mit dem Gelenkarm des Erdarbeitzeuges zu verbinden, waagerechte Schneidemittel (5, 6), die von einem waagerecht angeordneten metallischen Flacheisen (15) gebildet sind, das am unteren Ende (14) eines in seinem oberen Teil (10) fest mit den Anschlußmitteln (3) verbundenen und ein senkrechtes Schneidemesser (7) bildenden Ständers (8) geringer Dicke befestigt ist, umfaßt, dadurch gekennzeichnet, daß die genannten waagerechten Schneidemittel (5, 6) sich an beiden Seiten und im wesentlichen am Vorderteil dieses senkrechten Schneidemessers (7) erstrecken, wobei das diese waagerechten Schneidemittel (5, 6) bildende metallische Flacheisen (15) an seinem Vorderrand (16) einen Ausschnitt (17) umfaßt, der es erlaubt, zwei an beiden Seiten der senkrechten Längsmittelebene (9) des Stumpfrodegeräts (1) befindlichen scharfen Glieder (18, 19), die an deren Oberfläche (20) einen angefasten Querschnitt aufweisen, der ihnen einen scharfen Rand (21) verleiht, zu bestimmen.

2. Stumpfrodegerät (1) nach Anspruch 1, dadurch gekennzeichnet, daß sich die Seitenränder (22) des Ausschnitts (17) von innen nach außen hin erweitern, wobei den scharfen Gliedern (18, 19) einen schrägen Rand (33) verleiht wird.

3. Stumpfrodegerät (1) nach Anspruch 1, dadurch gekennzeichnet, daß das metallische Flacheisen (15) an seiner Oberfläche (24) und im Bereich seines von den scharfen Gliedern (18, 19) abgegrenzten Vorderrandes (23) angefast ist, sodaß ein scharfer Rand (25) bestimmt wird.

4. Stumpfrodegerät (1) nach Anspruch 1, dadurch gekennzeichnet, daß der scharfe Rand (21) der scharfen Glieder (18, 19) senkrecht zur senkrechten Längsmittelebene (9) des genannten Stumpfrodegeräts ist.

5. Stumpfrodegerät (1) nach Ansprüchen 1 und 4, dadurch gekennzeichnet, daß es in seinem unteren Teil (4) eine Struktur umfaßt, die im wesentlichen symmetrisch bezüglich einer Quermittelebene (26) ist und, demzufolge, in ihrem Hinterteil (27) dieselben Merkmale als diejenigen ihres Vorderteils (28) aufweist.

6. Stumpfrodegerät (1) nach Ansprüchen 1 und 5, dadurch gekennzeichnet, daß das metallische Flacheisen (15) an seinen Seitenrändern (29, 30) Ausschnitte (31) umfaßt, die es erlauben, seine Oberfläche zu vermindern, um die Reibungskräfte, die beim Schneiden auf sie ausgeübt werden, zu vermindern.

7. Stumpfrodegerät (1) nach Anspruch 1, dadurch gekennzeichnet, daß die Seitenränder (32) des metallischen Flacheisen (15) erhöht sind, sodaß dieses letzte ein hohlgewölbtes Gestalt, im wesentlichen gleich eines Hohlmeißels, aufweist.

# FIG.1

# FIG.2